(19) 

Europäisches Patentamt

European Patent Office

Office européen des brevets

(11) **EP 4 001 870 A1**

(12) **EUROPÄISCHE PATENTANMELDUNG**

(43) Veröffentlichungstag:
**25.05.2022 Patentblatt 2022/21**

(21) Anmeldenummer: **20208459.6**

(22) Anmeldetag: **18.11.2020**

(51) Internationale Patentklassifikation (IPC):
**G01K 7/20** (2006.01)

(52) Gemeinsame Patentklassifikation (CPC):
**G01K 7/206**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Healthcare GmbH**
**91052 Erlangen (DE)**

(72) Erfinder: **Sturm, Leander**
**95490 Mistelgau (DE)**

(54) **WIDERSTANDSBASIERTE TEMPERATURMESSUNG MIT WEITEM MESSBEREICH**

(57) Es wird ein Temperaturmessverfahren beschrieben. Bei dem Temperaturmessverfahren wird ein Spannungswert als Spannungsabfall an einem Thermistor ($R_{TH}$), welcher einen vorbestimmten Messbereich umfasst, gemessen. Weiterhin wird eine Messbereichsfokussierung durchgeführt, wobei der Messbereich des Thermistors ($R_{TH}$) auf einen Messbereich eines AD-Wandlers (ADC) abgebildet wird. Schließlich wird ein auf den Messbereich des AD-Wandlers (ADC) abgebildeter Wert ($U_{ADC}$) des gemessenen Spannwerts durch den AD-Wandler (ADC) erfasst. Zudem wird eine Temperaturmessschaltung (20) beschrieben. Es wird auch ein Kühlsystem beschrieben. Weiterhin wird ein Computertomographiesystem beschrieben.

FIG 2

EP 4 001 870 A1

**Beschreibung**

Die Erfindung betrifft ein Temperaturmessverfahren. Zudem betrifft die Erfindung eine Temperaturmessschaltung. Die Erfindung betrifft auch ein Kühlsystem. Weiterhin betrifft die Erfindung ein Computertomographiesystem.

Computertomographen erzeugen eine hohe Menge an Abwärme. Denn in den Röntgenröhren einer Scaneinheit eines Computertomographen wird bei der Erzeugung von Röntgenstrahlung mehr als 99% der eingesetzten Energie in Wärme umgesetzt. Diese Wärme wird mit Hilfe eines Kühlmediums aus der Röntgenröhre abgeführt. Um Ein- und Auslasstemperaturen eines solchen Kühlsystems zu ermitteln, wird eine Temperaturmessung benötigt. Insbesondere dienen solche Temperaturmesswerte einer Temperaturregelung als Eingangsparameter.

Üblicherweise werden sogenannte Thermistoren zur Temperaturmessungen genutzt, deren Widerstandswert sich in Abhängigkeit von der Temperatur ändert. Bei einer Temperaturmessung mit einem Thermistor wird ein Thermistor mit einer Versorgungsspannung beaufschlagt und es wird der widerstandsabhängige Spannungsabfall am Thermistor gemessen. Anhand des ermittelten Widerstands des Thermistors kann auf die Temperatur geschlossen werden.

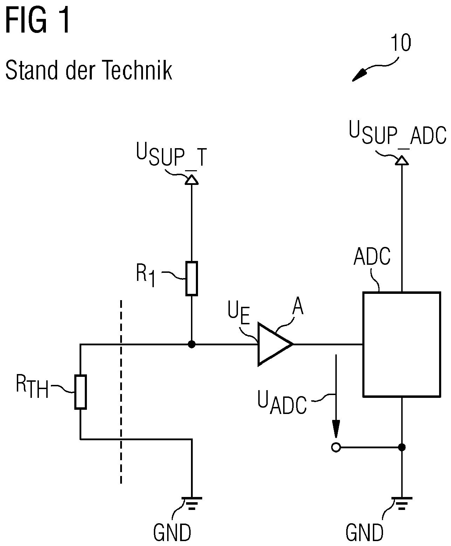

Allerdings sind die Anforderungen an eine solche Messschaltung hinsichtlich der Genauigkeit bei der Kühlung von CT-Systemen sehr hoch und es werden große Stückzahlen von Messeinheiten benötigt, so dass es wünschenswert ist, dass die Messschaltungen möglichst günstig herstellbar sind. Außerdem ist bei einer herkömmlichen Messschaltung, wie sie in FIG 1 gezeigt ist, der nutzbare Messbereich des AD-Wandlers stark eingeschränkt, was bei der Temperaturregelung zu einem Problem führen kann. Dieses Problem ergibt sich dadurch, dass bei einem vorgegebenen Temperaturmessbereich bedingt durch den von dem Wert 0 verschiedenen Widerstandswert des Thermistors am unteren Messbereichsende ein Spannungsoffset auftritt, der nach einer Verstärkung des Messwerts noch vergrößert wird und den nutzbaren Spannungsbereich eines dem Thermistor nachgeschalteten AD-Wandlers einschränkt. Durch die Einschränkung des nutzbaren Spannungsbereichs des AD-Wandlers ergibt sich eine eingeschränkte Messgenauigkeit.

Es besteht also das Problem, eine kostengünstige Temperaturmessschaltung für ein CT-Kühlungssystem mit verbesserter Genauigkeit der Temperaturmesswerte bereitzustellen.

Diese Aufgabe wird durch ein Temperaturmessverfahren gemäß Patentanspruch 1, eine Temperaturmessschaltung gemäß Patentanspruch 3, ein Kühlsystem gemäß Patentanspruch 8 und ein Computertomographiesystem gemäß Patentanspruch 9 gelöst.

Bei dem erfindungsgemäßen Temperaturmessverfahren wird ein Spannungswert als Spannungsabfall an einem Thermistor, welcher einen vorbestimmten Messbereich umfasst, gemessen. Weiterhin wird eine Messbereichsfokussierung durchgeführt, wobei der Messbereich des Thermistors auf einen Messbereich eines AD-Wandlers abgebildet wird. Für die Messbereichsfokussierung kann beispielsweise eine festverdrahtete elektronische Schaltung, vorzugsweise eine Verstärkerschaltung, noch bevorzugter eine Differenzverstärkerschaltung verwendet werden.

Schließlich wird ein auf den Messbereich des AD-Wandlers abgebildeter gemessener elektrischer Spannungswert durch den AD-Wandler erfasst. Vorteilhaft lässt sich ein Spannungsoffset des Eingangssignals des AD-Wandlers durch die beschriebene Messbereichsfokussierung vermeiden bzw. reduzieren, so dass ein effektiver Messbereich des AD-Wandlers vergrößert wird. Durch die Vergrößerung des effektiven Messbereichs des AD-Wandlers ergibt sich eine verbesserte Messauflösung. Weiterhin wird auch der Signal-Rausch-Abstand des AD-Wandlers vergrößert. Darüber hinaus wird die Präzision des AD-Wandlers verbessert, da der Offset verkleinert sowie die Fehler der Übertragungsfunktion und der Quantisierung reduziert werden.

Die erfindungsgemäße Temperaturmessschaltung weist einen ersten Spannungsteiler auf. Der erste Spannungsteiler umfasst einen Thermistor, einen elektrischen Pull-up-Widerstand und einen zwischen den beiden Widerständen liegenden Spannungsteilerknoten. Die Temperaturmessschaltung weist auch einen zweiten Spannungsteiler auf, welcher einen dritten elektrischen Widerstand und einen vierten elektrischen Widerstand und einen zwischen dem dritten elektrischen Widerstand und dem vierten elektrischen Widerstand liegenden Spannungsteilerknoten umfasst. Teil der Temperaturmessschaltung ist auch ein Differenzverstärker mit einem ersten Eingang und einem zweiten Eingang und einem Ausgang. Darüber hinaus umfasst die Temperaturmessschaltung auch einen AD-Wandler. Der erste Eingang des Differenzverstärkers ist mit dem Spannungsteilerknoten des ersten Spannungsteilers elektrisch verbunden, der zweite Eingang des Differenzverstärkers ist mit dem Spannungsteilerknoten des zweiten Spannungsteilers elektrisch verbunden und der Ausgang des Differenzverstärkers ist mit dem Eingang des AD-Wandlers elektrisch verbunden.

Vorteilhaft lässt sich ein Spannungsoffset des Eingangssignals des AD-Wandlers durch eine Wahl des dritten elektrischen Widerstands und des vierten elektrischen Widerstands festlegen. Besonders vorteilhaft kann dieser Spannungsoffset durch diese Wahl verkleinert werden, so dass ein effektiver Messbereich des AD-Wandlers vergrößert wird. Wie bereits erwähnt, ergibt sich durch die Vergrößerung des effektiven Messbereichs des AD-Wandlers eine verbesserte Messauflösung. Weiterhin wird auch der Signal-Rausch-Abstand des AD-Wandlers vergrößert. Darüber hinaus wird die Präzision des AD-Wandlers verbessert, da der Offset verkleinert sowie die Fehler der Übertragungsfunktion und der Quantisierung reduziert werden. Durch die Wahl der beschriebenen Schaltungstopologie wird eine Messbereichsfokussierung erreicht, wobei auf den Einsatz teurer Bauteile verzichtet werden kann. Anstelle von teuren hochauflösenden AD-Wandlern können kostengünstige AD-Wandler mit niedrigerer Auflösung genutzt werden.

Das erfindungsgemäße Kühlsystem für eine Röntgenröhre eines Computertomographiesystems weist eine erfindungsgemäße Temperaturmessschaltung auf. Das erfindungsgemäße Kühlsystem weist den Vorteil einer exakteren Überwachung der Temperaturen zu kühlender Bauteile des Computertomographiesystems, insbesondere Teilen der Röntgenröhre, auf. Durch die Kenntnis der exakten Temperatur kann die Kühlung exakter gesteuert werden.

Das erfindungsgemäße Computertomographiesystem weist eine Scaneinheit zur Akquisition von Rohdaten von einem Patienten, eine Steuerungseinrichtung zum Ansteuern der Scaneinheit und die erfindungsgemäße Temperaturmessschaltung auf. Das erfindungsgemäße Computertomographiesystem teilt die Vorteile des erfindungsgemäßen Kühlsystems.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

In einer Variante des erfindungsgemäßen Temperaturmessverfahrens wird im Rahmen der Spannungsmessung ein erster Spannungsabfall an einem Spannungsteilerknoten eines ersten Spannungsteilers gemessen. Der erste Spannungsteiler umfasst einen Thermistor und einen elektrischen Pull-up-Widerstand und den bereits genannten Spannungsteilerknoten, der zwischen den beiden Widerständen liegt.

Bei der Messbereichsfokussierung wird ein zweiter Spannungsabfall an einem Spannungsteilerknoten eines zweiten Spannungsteilers gemessen. Der zweite Spannungsteiler umfasst einen dritten elektrischen Widerstand und einen vierten elektrischen Widerstand und den bereits genannten Spannungsteilerknoten. Der Spannungsteilerknoten liegt zwischen dem dritten elektrischen Widerstand und dem vierten elektrischen Widerstand.

Weiterhin wird eine Spannungsdifferenz zwischen dem Spannungsteilerknoten des ersten Spannungsteilers und dem Spannungsteilerknoten des zweiten Spannungsteilers gemessen. Diese Messung erfolgt mit Hilfe eines Differenzverstärkers. Der Differenzverstärker weist einen ersten Eingang und einen zweiten Eingang und einen Ausgang auf. Der erste Eingang des Differenzverstärkers ist mit dem Spannungsteilerknoten des ersten Spannungsteilers elektrisch verbunden und der zweite Eingang des Differenzverstärkers ist mit dem Spannungsteilerknoten des zweiten Spannungsteilers elektrisch verbunden.

Bei dem Schritt des Erfassens des abgebildeten Spannungswerts wird eine Ausgangsspannung des Differenzverstärkers gemessen. Die Messung erfolgt durch den AD-Wandler. Dazu ist der Ausgang des Differenzverstärkers mit dem Eingang des AD-Wandlers elektrisch verbunden.

Vorteilhaft lässt sich ein Spannungsoffset des Eingangssignals des AD-Wandlers durch eine Wahl des dritten elektrischen Widerstands und des vierten elektrischen Widerstands geeignet festlegen. Besonders vorteilhaft kann dieser Spannungsoffset durch diese Wahl verkleinert werden, so dass ein effektiver Messbereich des AD-Wandlers vergrößert wird.

In einer Ausgestaltung der erfindungsgemäßen Temperaturmessschaltung sind der dritte elektrische Widerstand und der vierte elektrische Widerstand derart dimensioniert, dass die Eingangsspannung des AD-Wandlers bei einer vorbestimmten Minimaltemperatur möglichst nahe bei dem Wert Null liegt. Vorteilhaft ist damit der Spannungsoffset des AD-Wandlers möglichst klein, so dass die gesamte Spannungsbandbreite des AD-Wandlers als Messbereich zur Verfügung steht. Auf diese Weise wird die Auflösung und damit die Präzision der Messung verbessert.

In einer Variante der erfindungsgemäßen Temperaturmessschaltung wird eine Verstärkung für den Differenzverstärker derart gewählt, dass die Eingangsspannung des AD-Wandlers bei einer vorbestimmten Maximaltemperatur einen Wert aufweist, der möglichst nahe bei dem Wert der Versorgungsspannung des AD-Wandlers liegt. Auch diese Maßnahme dient dazu, den verfügbaren Spannungsbereich des AD-Wandlers für die Temperaturmessung auszunutzen und damit die Auflösung und die Präzision der Temperaturmessung zu verbessern.

Bevorzugt ist die erfindungsgemäße Temperaturmessschaltung derart ausgebildet, dass eine ratiometrische Messung durchgeführt wird, wobei die Versorgungsspannung der Spannungsteiler gleich der Versorgungsspannung des AD-Wandlers gewählt wird.

Die ADC-Spannung ergibt sich zu (siehe auch Gleichung 4):

$$U_{ADCeff} = U_{SUP_T} \cdot V \cdot \left( \frac{R_{TH\_max}}{R_{TH\_max}+R1} - \frac{R_{TH\_min}}{R_{TH\_min}+R1} \right),$$

wobei $U_{ADCeff} = \frac{ADC_{Wert}}{ADC\_Wert\_max} * U_{SUP_{ADC}}$ mit ADC$_{WERT\_MAX}$ = 2$^{ADC\text{-AUFLÖSUNG}}$.

Dabei ist U$_{SUP\_T}$ die Versorgungspannung des Thermistors, sind R$_{TH\_min}$ und R$_{TH\_MAX}$ Widerstandswerte des Thermistors R$_{TH}$ für die Minimaltemperatur und die Maximaltemperatur, ist R1 der zweite Widerstand, der mit dem Thermistorwiderstand $R_{TH}$ einen Spannungsteiler bildet, ist $U_{ADC\_eff}$ der effektive Messbereich des AD-Wandlers, ist $U_{SUP\_ADC}$ die Versorgungsspannung des AD-Wandlers, ist $ADC_{Wert}$ der ADC-Wert des AD-Wandlers und ist $ADC_{Wert\_max}$ der maximale ADC-Wert des Ad-Wandlers.

Wählt man $U_{SUP\_ADC} = U_{SUP\_T}$, kürzen sich die Versorgungsspannungen heraus und Abweichungen von der Sollspannung führen somit nicht zu einem zusätzlichen Fehler.

Besonders bevorzugt ist die erfindungsgemäße Temperaturmessschaltung derart ausgebildet, dass der Quotient der elektrischen Widerstände des dritten und vierten Widerstands gleich dem Quotienten der elektrischen Widerstände des zweiten Widerstands und des Thermistorwiderstands bei einer vorbestimmten Minimaltemperatur gewählt wird. Diese Wahl der Widerstandswerte erlaubt eine maximale Verstärkung bei einer maximalen Ausnutzung des Spannungsbereichs des AD-Wandlers und damit eine maximale Auflösung sowie eine maximale Präzision der Temperaturmessung.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:

FIG 1 schematisch eine herkömmliche Temperaturmessschaltung,

FIG 2 eine schematische Darstellung einer Temperaturmessschaltung gemäß einem Ausführungsbeispiel der Erfindung,

FIG 3 ein Flussdiagramm, welches ein Temperaturmessverfahren gemäß einem Ausführungsbeispiel der Erfindung veranschaulicht.

FIG 1 zeigt eine herkömmliche Temperatur-Messschaltung 10. Die Temperatur-Messschaltung 10 weist einen Thermistor $R_{TH}$ zur Messung einer Temperatur auf. Der Thermistor $R_{TH}$ bildet zusammen mit einem zweiten Widerstand R1 einen Spannungsteiler, an dem eine elektrische Versorgungsspannung $U_{SUP\_T}$ anliegt. Außerdem ist der Thermistor $R_{TH}$ mit Masse GND elektrisch verbunden. Die Temperatur-Messschaltung 10 umfasst außerdem einen Verstärker A, welcher die Spannung am Schaltungsknoten zwischen den beiden Widerständen $R_{TH}$, R1 um den Verstärkungsfaktor V verstärkt. Überdies umfasst die Schaltung 10 einen AD-Wandler ADC, an dem eine Versorgungsspannung $U_{SUP\_ADC}$ anliegt.

Der durch die Widerstände R1 und $R_{TH}$ fließende Strom $I_{TH}$ beträgt:

$$I_{TH} = \frac{U_{SUP\_T}}{R_{TH}+R1}. \hspace{2cm} (1)$$

Die am Eingang des Verstärkers A anliegende Spannung $U_E$ beträgt mithin:

$$U_E = U_{SUP_T} - I_{TH} \cdot R_1 = U_{SUP_T} \cdot \frac{R_{TH}}{R_{TH}+R_1}. \hspace{2cm} (2)$$

Am Ausgang des Verstärkers liegt dann die folgende Spannung $U_{ADC}$ an:

$$U_{ADC} = U_{SUP_T} \cdot V \cdot \frac{R_{TH}}{R_{TH}+R_1}. \hspace{2cm} (3)$$

Allerdings weist ein solcher Thermistor einen großen Temperaturbereich auf, der den für die Anwendung benötigten Temperaturbereich in vielen Fällen deutlich übersteigt. Dies wird bei typischen Thermistor-Ausweteschaltungen nicht berücksichtigt, wodurch ein Teil des dem AD-Wandler zur Verfügung stehenden Spannungsintervalls zwischen 0V und $U_{SUP\_ADC}$ nicht genutzt wird. Dieser Umstand führt zu einer reduzierten Auflösung und Genauigkeit der Messung.

Der Messbereich der Temperaturmessschaltung ist abhängig von den Widerstandswerten $R_{TH\_min}$ und $R_{TH\_max}$ des Thermistors $R_{TH}$ für die Minimaltemperatur und die Maximaltemperatur.

Für den effektiven Messbereich $U_{ADC\_eff}$ ergibt sich dann:

$$U_{ADCeff} = U_{SUP_T} \cdot V \cdot \left( \frac{R_{TH\_max}}{R_{TH\_max}+R1} - \frac{R_{TH\_min}}{R_{TH\_min}+R1} \right). \qquad (4)$$

Die Verstärkung muss so gewählt werden, dass $U_{ADC}$ ($R_{TH\_max}$) <= $U_{SUP\_ADC}$ ist. Daraus ergibt sich eine maximale Verstärkung für $U_{SUP\_T}$ = $U_{SUP\_ADC}$ unter Anwendung des ratiometrischen Messprinzips:

$$V \le 1 + \frac{R_1}{R_{THmax}}. \qquad (5)$$

Setzt man Gleichung (5) in Gleichung (4) ein, so erhält man als maximalen effektiven Messbereich $U_{ADC\_eff\_max}$

$$U_{ADCeff\_max} = U_{SUP_T} \cdot \left( 1 - \frac{R_{TH\_min}}{R_{TH\_max}} \cdot \frac{R_{TH\_max}+R_1}{R_{TH\_min}+R_1} \right). \qquad (6)$$

Wird nun für R1 ein maximaler Wert von R1 = $R_{TH\_max}$ gewählt, so ergibt sich eine maximale Verstärkung V = 2 und ein maximaler Messbereich von

$$U_{ADCeff\_max} = U_{SUP_T} \cdot \left( 1 - 2\frac{R_{TH\_min}}{R_{THmax}+R_{TH\_min}} \right). \qquad (7)$$

Beispielsweise wird von einem Thermistor KTY 81-210 ein typischer Temperaturbereich von 0°C bis 50°C genutzt. Der Thermistor weist zwar einen deutlich höheren Temperaturbereich auf, jedoch wird nur der genannte eingeschränkte Bereich genutzt. Der Thermistor wird mit einer Versorgungsspannung $U_{SUP\_T}$ von 3,3 Volt versorgt. Der eingesetzte Pull-UP-Widerstand R1 weist einen Widerstand von 2000 Ohm auf. Der Widerstand des Thermistors R_TH beträgt bei 0°C 1540 Ohm und bei 50°C 2417 Ohm.

Die minimale Spannung $U_{ADC}$ beträgt dann 2,58 V und die maximale Spannung 3,25 Volt. Hieraus ergibt sich ein Messbereich von nur 0,67 Volt, was nur etwa 20% der an dem Thermistor $R_{TH}$ liegenden Versorgungsspannung $U_{SUPT}$ von 3,3 Volt ausmacht.

Die Verstärkung V wurde in dem Beispiel mit 1,8 bewusst so gewählt, dass die obere Grenze der Spannung $U_{ADC}$, welche durch die Versorgungsspannung $U_{SUP\_T}$ gegeben ist, möglichst gut ausgenutzt wird. Aufgrund des endlichen Thermistor-Widerstands am unteren Messbereichsende von 1540 Ohm beträgt jedoch die AD-Wandler-Spannung $U_{ADC}$ an diesem Punkt nur 2,58 V. Damit wird nur ein kleiner Bereich von 0,67 V des vorhandenen Messbereichs von 3,3 V genutzt, was zu massiven Einschränkungen führt. Denn die Messauflösung wird im Vergleich zu einer vollständigen Messbereichsausnutzung um den Faktor 5 verringert. Infolgedessen wird der Signal-Rausch-Abstand um den Faktor 5 reduziert. Damit wird die Messgenauigkeit reduziert, denn Fehler bei der Spannungsmessung, wie zum Beispiel ein Offset, eine Abweichung bei der Verstärkung oder ein Fehler aufgrund der Quantisierung, wirken sich bei einem eingeschränkt genutzten Spannungsbereich des AD-Wandlers stärker aus.

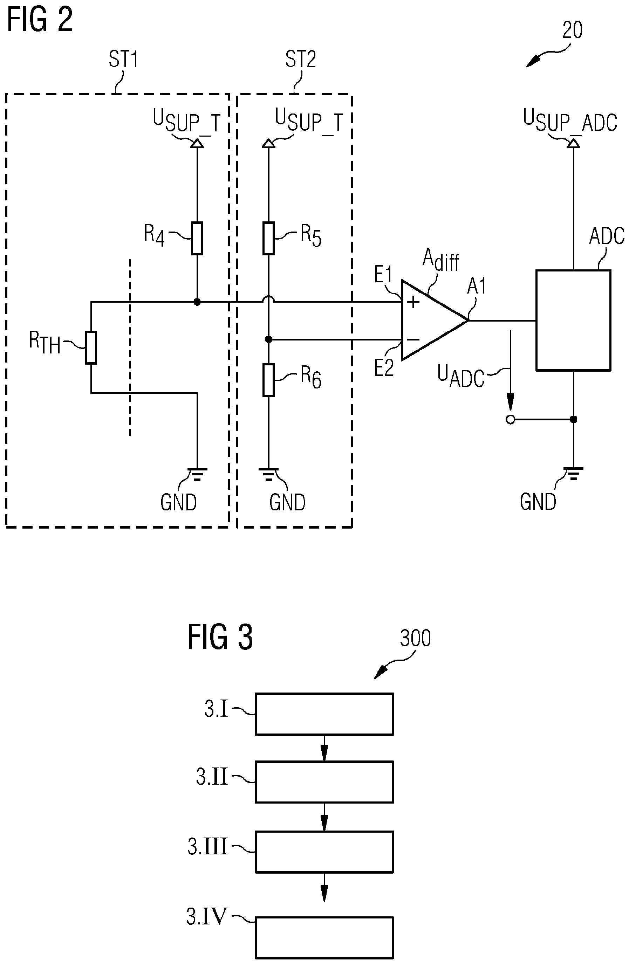

In FIG 2 ist eine schematische Darstellung einer Temperaturmessschaltung 20 gemäß einem Ausführungsbeispiel der Erfindung veranschaulicht. Die in FIG 2 gezeigte Schaltungsanordnung 20 umfasst ähnlich wie die in FIG 1 gezeigte Schaltung 10 einen Thermistor $R_{TH}$ zur Messung einer Temperatur. Der Thermistor $R_{TH}$ bildet zusammen mit einem zweiten Widerstand $R_4$ einen ersten Spannungsteiler ST1, an dem eine elektrische Versorgungsspannung $U_{SUP\_T}$ anliegt. Überdies umfasst die Schaltung 20 einen AD-Wandler ADC, an dem eine Versorgungsspannung $U_{SUP\_ADC}$ anliegt. Außerdem ist der Thermistor mit Masse GND elektrisch verbunden. Die Schaltung 20 umfasst ferner einen Verstärker $A_{diff}$, welcher die Spannung am Schaltungsknoten zwischen den beiden Widerständen $R_{TH}$, $R_4$ um einen Verstärkungsfaktor V verstärkt. Allerdings ist dieser Verstärker $A_{diff}$, anders als bei der herkömmlichen, in FIG 1 gezeigten Schaltung 10, nun als Differenzverstärker ausgebildet, an dessen positivem Eingang E1 die genannte Spannung am Schaltungsknoten zwischen dem Thermistor $R_{TH}$ und dem zweiten Widerstand $R_4$ anliegt und an dessen negativem Eingang E2 eine Spannung anliegt, die durch einen zweiten Spannungsteiler ST2 erzeugt wird, der die Widerstände $R_5$ und $R_6$ umfasst und an dem ebenfalls die Spannung $U_{SUP\_T}$ anliegt. In der in FIG 2 gezeigten Schaltung wird von dem Differenzverstärker also nur die Spannung $U_{diff}$ verstärkt mit

$$U_{diff} = U_{SUP_T} \cdot \left( \frac{R_{TH}}{R_{TH}+R4} - \frac{R6}{R5+R6} \right) . \qquad (8)$$

Mithin ergibt sich eine Messspannung $U_{ADC}$ zu

$$U_{ADC} = V \cdot U_{SUP_T} \cdot \left( \frac{R_{TH}}{R_{TH}+R4} - \frac{R6}{R5+R6} \right). \qquad (9)$$

Für $R_5/R_6 \geq R_4/R_{TH\_min}$ gilt dann für den effektiven Messbereich (für $R_5/R_6 < R_4/R_{TH\_min}$ wäre $U_{ADC}$ negativ):

$$U_{ADCeff} = U_{SUP_T} \cdot V \cdot \left( \frac{R_{TH\_max}}{R_{TH\_max}+R4} - \frac{R_{TH\_min}}{R_{TH\_min}+R4} \right). \qquad (10)$$

Die Verstärkung muss so gewählt werden, dass $U_{ADC}$ ($R_{TH\_max}$) <= $U_{SUP\_ADC}$ ist. Daraus ergibt sich eine maximale Verstärkung für $U_{SUP\_T}$ = $U_{SUP\_ADC}$ (ratiometrisches Messprinzip) :

$$V \leq \frac{(R_{THmax}+R_4)\cdot(R_5+R_6)}{R_{THmax}\cdot(R_5+R_6)-R_6\left(R_{THmax}+R_4\right)} = \frac{1}{\frac{1}{1+\frac{R_4}{R_{TH\_max}}} - \frac{1}{1+\frac{R_5}{R_6}}}. \qquad (11)$$

Wählt man das Verhältnis zwischen R5 und R6 ähnlich dem von $R_4$ und $R_{TH\_max}$, so sind starke Verstärkungen möglich. Allerdings muss gelten: $R_5/R_6 \geq R_4 / R_{TH\_min}$. Daraus folgt, dass $R_5/R_6 = R_4$ der günstigste Wert für eine maximale Verstärkung ist.

Setzt man Gleichung (11) in Gleichung (10) ein, so erhält man als effektiven Messbereich $U_{ADCeff}$:

$$U_{ADCeff} = U_{SUP\_ADC} \cdot \left( \frac{1}{\frac{1}{1+\frac{R_4}{R_{TH\_max}}} - \frac{1}{1+\frac{R_5}{R_6}}} \cdot \left( \frac{R_{TH\_max}}{R_{TH\_max}+R4} - \frac{R_{TH\_min}}{R_{TH\_min}+R4} \right) \right). \qquad (12)$$

Und mit $R_5/R_6 = R_4/R_{TH\_min}$ erhält man $U_{ADCEFF\_MAX} = U_{SUP\_ADC}$ und damit den maximal möglichen maximalen effektiven Messbereich.

Die beiden Widerstände $R_5$ und $R_6$ können also so gewählt werden, dass der bei der herkömmlichen Schaltung auftretende Offset für die Spannung $U_{ADC}$ möglichst klein wird, im genannten Grenzfall sogar den Wert 0 annimmt.

Wird nun bei dem bereits im Zusammenhang mit FIG 1 erwähnten konkreten Beispiel ein Widerstand $R_5$ mit 13300 Ohm und ein Widerstand $R_6$ mit 10000 Ohm verwendet, so kann ein höherer Verstärkungsfaktor mit V = 8.5 gewählt werden. Trotzdem liegt dann die minimale Spannung $U_{ADC}$ bei nur 0.16 V. Die maximale Spannung liegt in diesem Beispiel bei 3,27 Volt. Hieraus ergibt sich ein Messbereich von 3,11 Volt, was nun etwa 94% der an dem Thermistor $R_{TH}$ liegenden Versorgungsspannung $U_{SUP\_T}$ ausmacht.

Der günstigste Wert für den effektiven Messbereich wird für $R_5$ = 12987,7 Ohm und $R_6$ = 10000 Ohm erreicht.

Mithin wird mit einer geeigneten Schaltungsdimensionierung der Messbereich des Thermistors fast oder gar vollständig ausgenutzt.

In dem genannten konkreten Beispiel weist die Schaltung 20 eine im Vergleich zu der herkömmlichen Schaltung um den Faktor 5 verbesserte Messauflösung auf. Auch der Signal-Rausch-Abstand ist um den Faktor 5 verbessert. Außerdem wirken sich die Fehler bei der Spannungsmessung, wie zum Beispiel ein Offset, eine Abweichung der Verstärkung oder ein Fehler aufgrund der Quantisierung, aufgrund des vergrößerten Messbereichs entsprechend schwächer aus.

In FIG 3 ist ein Flussdiagramm 300 gezeigt, welches ein Temperaturmessverfahren gemäß einem Ausführungsbeispiel der Erfindung veranschaulicht.

Bei dem Schritt 3.I erfolgt die Wahl eines Widerstandsverhältnisses eines ersten Spannungsteilers und eines zweiten Spannungsteilers einer Temperaturmessschaltung mit dem in FIG 2 gezeigten Aufbau derart, dass ein Quotient der elektrischen Widerstände des dritten und vierten Widerstands $R_5$, $R_6$ gleich dem Quotienten der elektrischen Wiederstände $R_1$, $R_{TH\_min}$ des zweiten Widerstands $R_1$ und des Thermistorwiderstands $R_{TH}$ bei einer vorbestimmten Minimaltemperatur $T_{min}$ liegt.

Bei dem Schritt 3.II wird ein erster Spannungsabfall U1 an einem ersten Spannungsteiler ST1, welcher einen Thermistor $R_{TH}$ und einen elektrischen Pull-up-Widerstand $R_4$ und einen zwischen den beiden Widerständen $R_{TH}$, $R_4$ liegenden Spannungsteilerknoten umfasst, gemessen. Bei dem Schritt 3.III wird ein zweiter Spannungsabfall an einem zweiten Spannungsteiler ST2, welcher einen dritten elektrischen Widerstand $R_5$ und einen vierten elektrischen Widerstand $R_6$ und einen zwischen dem dritten elektrischen Widerstand $R_5$ und dem vierten elektrischen Widerstand $R_6$ liegenden Spannungsteilerknoten umfasst, gemessen. Es wird auch eine Spannungsdifferenz $U_{diff}$ zwischen dem ersten Spannungsabfall U1 und dem zweiten Spannungsabfall U2 durch einen Differenzverstärker $A_{diff}$ gemessen. Bei dem anschließenden Schritt 3.IV wird dann eine Ausgangsspannung $U_{ADC}$ des Differenzverstärkers mit einem AD-Wandler ADC gemessen. Bei der Messung ist ein erster Eingang E1 des Differenzverstärkers $A_{diff}$ mit dem Spannungsteilerknoten des ersten Spannungsteilers ST1 elektrisch verbunden und ist ein zweiter Eingang E2 des Differenzverstärkers $A_{diff}$ mit dem Spannungsteilerknoten des zweiten Spannungsteilers ST1 elektrisch verbunden. Außerdem ist ein Ausgang des Differenzverstärkers $A_{diff}$ mit dem Eingang des AD-Wandlers ADC elektrisch verbunden.

Es wird abschließend noch einmal darauf hingewiesen, dass es sich bei den vorhergehend detailliert beschriebenen Vorrichtungen und Verfahren lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

**Patentansprüche**

1. Temperaturmessverfahren, aufweisend die Schritte:

   - Messen eines Spannungswerts an einem Thermistor ($R_{TH}$), welcher einen vorbestimmten Messbereich umfasst,
   - Durchführen einer Messbereichsfokussierung, wobei der Messbereich des Thermistors ($R_{TH}$) auf einen Messbereich eines AD-Wandlers (ADC) abgebildet wird,
   - Erfassen eines auf den Messbereich des AD-Wandlers (ADC) abgebildeten Werts ($U_{ADC}$) des gemessenen Spannungswerts durch den AD-Wandler (ADC).

2. Temperaturmessverfahren nach Anspruch 1, wobei

   - der Schritt der Spannungsmessung aufweist das Messen eines ersten Spannungsabfalls (U1) an einem ersten Spannungsteiler (ST1), welcher den Thermistor ($R_{TH}$) und einen elektrischen Pull-up-Widerstand ($R_4$) und einen zwischen den beiden Widerständen ($R_{TH}$, $R_4$) liegenden Spannungsteilerknoten umfasst,
   - der Schritt der Messbereichsfokussierung die Schritte umfasst:

     - Messen eines zweiten Spannungsabfalls an einem zweiten Spannungsteiler (ST2), welcher einen dritten elektrischen Widerstand ($R_5$) und einen vierten elektrischen Widerstand ($R_6$) und einen zwischen dem dritten elektrischen Widerstand ($R_5$) und dem vierten elektrischen Widerstand ($R_6$) liegenden Spannungsteilerknoten umfasst,
     - Ermitteln einer Spannungsdifferenz ($U_{diff}$) zwischen dem ersten Spannungsabfall (U1) und dem zweiten Spannungsabfall (U2) mit einem Differenzverstärker ($A_{diff}$) mit einem ersten Eingang (E1) und einem zweiten Eingang (E2) und einem Ausgang (A1),

       - der erste Eingang (E1) des Differenzverstärkers ($A_{diff}$) mit dem Spannungsteilerknoten des ersten Spannungsteilers (ST1) elektrisch verbunden ist,
       - der zweite Eingang (E2) des Differenzverstärkers ($A_{diff}$) mit dem Spannungsteilerknoten des zweiten Spannungsteilers (ST1) elektrisch verbunden ist und
       - der Ausgang des Differenzverstärkers ($A_{diff}$) mit dem Eingang des AD-Wandlers (ADC) elektrisch verbunden ist,

     - und der Schritt des Erfassens des abgebildeten Spannungswerts das Erfassen einer Ausgangsspannung ($U_{ADC}$) des Differenzverstärkers mit dem AD-Wandler (ADC) umfasst.

3. Temperaturmessschaltung (20), aufweisend:

   - einen ersten Spannungsteiler (ST1), welcher einen Thermistor ($R_{TH}$) und einen elektrischen Pull-up-Widerstand ($R_4$) und einen zwischen den beiden Widerständen ($R_{TH}$, $R_4$) liegenden Spannungsteilerknoten umfasst,
   - einen zweiten Spannungsteiler (ST2), welcher einen dritten elektrischen Widerstand ($R_5$) und einen vierten

elektrischen Widerstand ($R_6$) und einen zwischen dem dritten elektrischen Widerstand ($R_5$) und dem vierten elektrischen Widerstand ($R_6$) liegenden Spannungsteilerknoten umfasst,
- einen Differenzverstärker ($A_{diff}$) mit einem ersten Eingang (E1) und einem zweiten Eingang (E2) und einem Ausgang (A1),
- einen AD-Wandler (ADC),
wobei

- der erste Eingang (E1) des Differenzverstärkers ($A_{diff}$) mit dem Spannungsteilerknoten des ersten Spannungsteilers (ST1) elektrisch verbunden ist,
- der zweite Eingang (E2) des Differenzverstärkers ($A_{diff}$) mit dem Spannungsteilerknoten des zweiten Spannungsteilers (ST1) elektrisch verbunden ist und
- der Ausgang (A1) des Differenzverstärkers ($A_{diff}$) mit dem Eingang des AD-Wandlers (ADC) elektrisch verbunden ist.

4. Temperaturmessschaltung nach Anspruch 3, wobei der dritte elektrische Widerstand und der vierte elektrische Widerstand derart dimensioniert ist, dass die Eingangsspannung ($U_{ADC}$) des AD-Wandlers (ADC) bei einer vorbestimmten Minimaltemperatur ($T_{min}$) möglichst nahe bei dem Wert Null liegt.

5. Temperaturmessschaltung nach Anspruch 3 oder 4, wobei eine Verstärkung für den Differenzverstärker derart gewählt wird, dass die Eingangsspannung ($U_{ADC}$) des AD-Wandlers (ADC) bei einer vorbestimmten Maximaltemperatur ($T_{max}$) einen Wert aufweist, der möglichst nahe bei dem Wert der Versorgungsspannung ($U_{SUP\_ADC}$) des AD-Wandlers (ADC) liegt.

6. Temperaturmessschaltung nach einem der Ansprüche 3 bis 5, wobei eine ratiometrische Messung durchgeführt wird, wobei die Versorgungsspannung ($U_{SUP\_T}$) der Spannungsteiler (ST1, ST2) gleich der Versorgungsspannung ($U_{SUP\_ADC}$) des AD-Wandlers (ADC) gewählt wird.

7. Temperaturmessschaltung nach einem der Ansprüche 3 bis 6, wobei der Quotient der elektrischen Widerstandswerte des dritten und vierten Widerstands (R5, R6) gleich dem Quotienten der elektrischen Widerstandsdwerte ($R_1$, $R_{TH\_min}$) des zweiten Widerstands ($R_1$) und des Thermistorwiderstands ($R_{TH\_min}$) bei einer vorbestimmten Minimaltemperatur ($T_{min}$) gewählt wird.

8. Kühlsystem für eine Röntgenröhre eines Computertomographiesystems, aufweisend eine Temperaturmessschaltung nach einem der vorstehend Ansprüche 3 bis 7.

9. Computertomographiesystem, aufweisend:

- eine Scaneinheit zur Akquisition von Rohdaten von einem Patienten,
- eine Steuerungseinrichtung zum Ansteuern der Scaneinheit,
- eine Temperaturmessschaltung (20) nach einem der Ansprüche 3 bis 7.

# FIG 1

Stand der Technik

10

$U_{SUP\_T}$

$U_{SUP\_ADC}$

$R_1$

$U_E$

A

ADC

$R_{TH}$

$U_{ADC}$

GND

GND

FIG 2

FIG 3

**Europäisches Patentamt**
**European Patent Office**
**Office européen des brevets**

# EUROPÄISCHER RECHERCHENBERICHT

**Nummer der Anmeldung**

EP 20 20 8459

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 130 731 A (NITTAN CO LTD) 6. Juni 1984 (1984-06-06) * Zusammenfassung * * Abbildungen 1-2 * * Seite 1, Zeile 53 - Seite 2, Zeile 27 * ----- | 1-9 | INV. G01K7/20 |
| A | DE 10 2016 105506 A1 (MINEBEA CO LTD [JP]) 28. September 2017 (2017-09-28) * Zusammenfassung * * das ganze Dokument * ----- | 1-9 | |
| A | EP 0 014 395 A1 (IBM [US]) 20. August 1980 (1980-08-20) * Zusammenfassung * * das ganze Dokument * ----- | 1-9 | |
| A | DE 11 2016 006920 T5 (OLYMPUS CORP [JP]) 14. Februar 2019 (2019-02-14) * Zusammenfassung * * das ganze Dokument * ----- | 1-9 | RECHERCHIERTE SACHGEBIETE (IPC) G01K |

Der vorliegende Recherchenbericht wurde für alle Patentansprüche erstellt

| Recherchenort | Abschlußdatum der Recherche | Prüfer |
|---|---|---|
| Den Haag | 7. Mai 2021 | Bagnera, Carlo |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 20 8459

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2021

| Im Recherchenbericht angeführtes Patentdokument | Datum der Veröffentlichung | Mitglied(er) der Patentfamilie | Datum der Veröffentlichung |
|---|---|---|---|
| GB 2130731 A | 06-06-1984 | GB 2130731 A<br>JP S5991501 A<br>US 4505600 A | 06-06-1984<br>26-05-1984<br>19-03-1985 |
| DE 102016105506 A1 | 28-09-2017 | KEINE | |
| EP 0014395 A1 | 20-08-1980 | EP 0014395 A1<br>JP H0139048 B2<br>JP S55105255 A<br>US 4214234 A | 20-08-1980<br>17-08-1989<br>12-08-1980<br>22-07-1980 |
| DE 112016006920 T5 | 14-02-2019 | CN 109152516 A<br>DE 112016006920 T5<br>JP 6716692 B2<br>JP WO2017208308 A1<br>US 2019089920 A1<br>WO 2017208308 A1 | 04-01-2019<br>14-02-2019<br>01-07-2020<br>28-03-2019<br>21-03-2019<br>07-12-2017 |

EPO FORM P0461

Für nähere Einzelheiten zu diesem Anhang : siehe Amtsblatt des Europäischen Patentamts, Nr.12/82